(19) Europäisches Patentamt / European Patent Office / Office européen des brevets

(11) **EP 4 613 788 A1**

(12) **EUROPEAN PATENT APPLICATION**
published in accordance with Art. 153(4) EPC

(43) Date of publication:
**10.09.2025 Bulletin 2025/37**

(21) Application number: **23886248.6**

(22) Date of filing: **01.11.2023**

(51) International Patent Classification (IPC):
***C08F 220/44*** *(2006.01)* ***C08F 220/06*** *(2006.01)*
***C08F 220/14*** *(2006.01)* ***C08F 220/18*** *(2006.01)*
***C08F 218/08*** *(2006.01)* ***C08L 33/20*** *(2006.01)*
***C08L 53/00*** *(2006.01)* ***H01M 50/414*** *(2021.01)*
***H01M 10/052*** *(2010.01)*

(52) Cooperative Patent Classification (CPC):
**C08F 218/08; C08F 220/06; C08F 220/14; C08F 220/18; C08F 220/44; C08L 33/20; C08L 53/00; H01M 10/052; H01M 50/414;** Y02E 60/10

(86) International application number:
**PCT/KR2023/017214**

(87) International publication number:
**WO 2024/096552 (10.05.2024 Gazette 2024/19)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **01.11.2022 KR 20220143654**

(71) Applicant: **Hansol Chemical Co., Ltd**
**Seoul 06169 (KR)**

(72) Inventors:
- **KIM, Young-Su**
  **Wanju-gun, Jeollabuk-do 55321 (KR)**
- **KIM, Jin-Yeong**
  **Wanju-gun, Jeollabuk-do 55321 (KR)**
- **NOH, Myeong-Jun**
  **Wanju-gun, Jeollabuk-do 55321 (KR)**
- **JANG, Bo-Ok**
  **Wanju-gun, Jeollabuk-do 55321 (KR)**
- **LEE, Nam-Joo**
  **Wanju-gun, Jeollabuk-do 55321 (KR)**
- **LEE, Go-Eun**
  **Wanju-gun, Jeollabuk-do 55321 (KR)**
- **CHO, Seung-Wan**
  **Wanju-gun, Jeollabuk-do 55321 (KR)**
- **OH, Sae-Wook**
  **Wanju-gun, Jeollabuk-do 55321 (KR)**
- **KWON, Se-Man**
  **Wanju-gun, Jeollabuk-do 55321 (KR)**

(74) Representative: **Cabinet Chaillot**
**16/20, avenue de l'Agent Sarre**
**B.P. 74**
**92703 Colombes Cedex (FR)**

# (54) COPOLYMER FOR SEPARATOR AND SECONDARY BATTERY COMPRISING SAME

(57) The present invention relates to a copolymer, and a slurry composition, a separator, and a secondary battery each comprising same, wherein the copolymer comprises: an acrylonitrile-based monomer unit, an acrylate-based monomer unit, an acrylic acid-based monomer unit, a vinyl acetate-based monomer unit, and a cyclic monomer unit including cyclopentyl, cyclohexyl, cyclooctyl, tetrahydrofuran, furan, dioxane, or a combination thereof.

EP 4 613 788 A1

## Description

### Technical Field

The present disclosure relates to a copolymer, and a slurry composition, a separator, and a secondary battery including same.

### Background Art

With high energy density, lithium secondary batteries are being used extensively in electrical, electronic, telecommunication, and computer fields. Furthermore, application fields of lithium secondary batteries are being expanded to high-capacity secondary batteries for hybrid vehicles, electric vehicles, and the like, in addition to small lithium secondary batteries for portable electronic devices.

Although the insulation of lithium-ion secondary batteries is achieved by separators, internal or external battery abnormalities or impacts cause short circuits between positive and negative electrodes, which may lead to heat generation and explosion. Thus, ensuring the thermal and chemical safety of separators is pivotal.

Currently, polyolefin-based films are being used widely as separators, but polyolefins have the disadvantages of severe thermal shrinkage at high temperatures and poor mechanical properties.

To enhance the stability of such polyolefin-based separators, a porous separator in which a polyolefin porous substrate film is coated with a mixture composed of inorganic particles and a binder has been developed.

In other words, to suppress battery instability caused by dendrites and thermal shrinkage of polyolefin-based separators caused by high temperatures, one or both sides of the porous separator substrate are coated with the inorganic particles in conjunction with the binder. Accordingly, the inorganic particles can impart the function of suppressing the shrinkage rate of the substrate while preparing a further safe separator by the coating layer.

In the meantime, an electrode adhesive layer on the separator reduces the dead space between the electrodes, accelerates the transfer of lithium ions, and serves as a pathway for the migration of lithium ions.

To exhibit these electrode adhesion properties, a coating method (a once-coated separator/OCS) in which a separator is coated with a resin dispersed in an inorganic substance, a coating method (a double-coated separator/DCS) in which an upper portion of a ceramic-precoated separator (a ceramic coated separator/CCS) is coated with a resin, and the like are being used.

To reduce the volume of the electrode attached to such a coated separator and to protect the electrode, a lamination technique using heat and pressure is used.

When multiple layers are stacked to manufacture a battery with high energy density, pressure is transferred into the battery, but heat is not properly transferred. As a result, the adhesion of the coated separator may deteriorate, leading to the formation of dead spaces.

In addition, to obtain excellent battery characteristics, the coating layer is required not only to be evenly coated but also to have strong adhesion to the substrate.

In particular, in high-capacity secondary batteries, the faster the charge/discharge speed, the more densely the electrodes are neatly stacked, leading to the formation of larger and more dead spaces inside the secondary battery.

Such a formed dead space results in an increase in the internal resistance of secondary batteries and a reduction in battery life. When applying a resin with electrode adhesion properties on a separator, the degradation of secondary battery performance caused by dead spaces may occur significantly less.

[Documents of related art]

[Patent Documents]

(Patent Document 1) Korean Patent No. 10-1430975
(Patent Document 2) Korean Patent Application Publication No. 10-2006-0072065

### Disclosure

### Technical Problem

Accordingly, the present disclosure aims to provide a slurry composition that improves electrode adhesion to a porous substrate with the use of a copolymer.

In addition, the present disclosure aims to provide a separator having excellent adhesion and air permeability with the application of the slurry composition, and a battery having excellent performance (electrical resistance properties) with the use of the separator.

However, the problems to be solved by the present application are not limited to the aforementioned description, and other problems not mentioned can be clearly understood by those skilled in the art from the following description.

## Technical Solution

In one aspect of the present application, a copolymer including an acrylonitrile-based monomer unit,

an acrylate-based monomer unit,
an acrylic acid-based monomer unit,
a vinyl acetate-based monomer unit, and
a cyclic monomer unit including cyclopentyl, cyclohexyl, cyclooctyl, tetrahydrofuran, furan, dioxane, or a combination thereof
is provided.

In another aspect of the present application,

a slurry composition including the copolymer and
inorganic particles
is provided.

In a further aspect of the present application, a separator including the slurry composition is provided.

In yet another aspect of the present application, a secondary battery including the separator is provided.

## Advantageous Effects

A copolymer of the present disclosure can increase electrode adhesion to a separator substrate and improve the heat resistance and air permeability of a separator.

In addition, the copolymer of the present disclosure can reduce possible defect rates occurring in the lamination process during battery assembly, minimize the formation of dead spaces, and enhance the ion conductivity and air permeability within an electrolyte solution.

In the meantime, using the copolymer of the present disclosure, the adhesion of the separator can be maximized, and ultimately, the electrical resistance characteristics and stability of a battery can be enhanced while minimizing battery defects.

## Best Mode

Hereinafter, the action and effect of the present disclosure will be described in more detail through specific embodiments of the present disclosure. However, these embodiments are provided only for illustrative purposes of the present disclosure, and the scope of the present disclosure is not limited thereby.

Prior to discussing the details, it should be noted that all terms or words used herein and used in the appended claims are not construed as being limited to general and dictionary meanings but will be interpreted based on the meanings and concepts corresponding to the technical ideas of the present disclosure, following the principle that any inventor is allowed to define the concepts of terms as appropriate to describe the disclosure thereof in the best mode.

Therefore, the embodiments described herein are configured merely as one of the most preferable examples of the present disclosure and do not exhaustively represent the technical idea of the present disclosure. Accordingly, it should be appreciated that there may be various equivalents and modifications that can replace these embodiments as of the filing date of the present application.

As used herein, the singular forms are intended to include the plural forms, unless the context clearly indicates otherwise. It will be further understood that the terms "comprise," "include," "have," and the like when used herein, are intended to specify the presence of stated features, integers, steps, constituent elements, or combinations thereof but do not preclude the possibility of the presence or addition of one or more other features, integers, steps, constituent elements, or combinations thereof.

As used herein, the expression "a to b" to represent a numerical range is defined as $\geq$ a and $\leq$ b.

A copolymer in one aspect of the present application may include: an acrylonitrile-based monomer unit, an acrylate-based monomer unit, an acrylic acid-based monomer unit, a vinyl acetate-based monomer unit, and a cyclic monomer unit including cyclopentyl, cyclohexyl, cyclooctyl, tetrahydrofuran, furan, dioxane, or a combination thereof.

The cyclic structure of the cyclic monomer unit can contribute to an increase in the formation of voids that are less affected by external impacts and environmental changes during the reaction and structural formation of emulsion polymers.

Such a void is referred to as free volume. An increase in this free volume may impart elasticity and wetting properties to polymers and facilitate the bonding between an adhesive surface and a surface adhered thereto during adhesion using pressure.

In addition, the free volume may enhance the core functions of a separator, which are to freely migrate electrons and lithium ions (Li ions), thereby improving air permeability and battery resistance characteristics.

In particular, compared to the structure of a nonpolar aliphatic hydrocarbon cyclic monomer, the structure of an oxygen atom-containing heterocyclic monomer may further enhance electrode adhesion and further reduce air permeability and battery resistance.

In one embodiment, the copolymer, based on 100 wt% of the total weight thereof, may include 10 wt% or more and 20 wt% or less of the acrylonitrile-based monomer, 35 wt% or more and 70 wt% or less of the acrylate-based monomer unit, 1 wt% or more and 10 wt% or less of the acrylic acid-based monomer unit, 5 wt% or more and 15 wt% or less of the vinyl acetate-based monomer unit, and 10 wt% or more and 20 wt% or less of the cyclic monomer unit.

When the content of the acrylonitrile-based monomer unit exceeds or falls short of the above numerical range of the present application, this may lead to deterioration in the dispersibility of polymer particles and the dispersibility of an inorganic slurry or may lead to deterioration in adhesion.

When the content of the acrylate-based monomer unit exceeds or falls short of the above numerical range of the present application, this may lead to deterioration in adhesion.

When the content of the acrylic acid-based monomer unit exceeds or falls short of the above numerical range of the present application, this may lead to aggregation and precipitation of the polymers or may lead to deterioration in adhesion.

When the content of the vinyl acetate-based monomer unit exceeds or falls short of the above numerical range of the present application, this may cause problems with stability, such as storage stability.

When the content of the cyclic monomer unit exceeds or falls short of the above numerical range of the present application, this may lead to problems with aggregation of the polymers, deterioration in adhesion, non-uniform particle size distribution, and the like.

In one embodiment, the acrylate-based monomer unit may be formed by polymerization of one or more selected from the group consisting of methyl acrylate, methyl methacrylate, ethyl acrylate, ethyl methacrylate, propyl acrylate, propyl methacrylate, isopropyl acrylate, isopropyl methacrylate, butyl acrylate, butyl methacrylate, sec-butyl acrylate, sec-butyl methacrylate, tert-butyl acrylate, tert-butyl methacrylate, ethyl hexyl acrylate, ethyl hexyl methacrylate, lauryl acrylate, lauryl methacrylate, stearyl acrylate, and stearyl methacrylate.

In addition, the acrylic acid-based monomer unit may be formed by polymerization of one or more selected from the group consisting of, for example, acrylic acid and methacrylic acid.

In the meantime, the acrylonitrile-based monomer unit may be formed by polymerization of one or more selected from the group consisting of acrylonitrile and methacrylonitrile.

In addition, the vinyl acetate-based monomer unit may be formed by polymerization of vinyl acetate monomers.

In one embodiment, the cyclic monomer unit may be formed by polymerization of cyclopentyl acrylate, cyclopentyl methacrylate, cyclohexyl acrylate, cyclohexyl methacrylate, cyclooctyl acrylate, cyclooctyl methacrylate, furfuryl acrylate, furfuryl methacrylate, furan methacrylate, tetrahydrofurfuryl acrylate, tetrahydrofurfuryl methacrylate, (5-ethyl-1,3-dioxan-5-yl)methyl acrylate, or a combination thereof.

In one embodiment, the acrylic acid-based monomer unit may be bonded to an alkali metal.

In other words, the carboxylate group of the acrylic acid-based monomer unit may be bonded to an alkali metal, an alkali metal-containing hydroxide, or a combination thereof.

The alkali metal may be Li, K, Na, or a combination thereof.

In the meantime, a weight ratio of the alkali metal to the copolymer (weight of the alkali metal:weight of the copolymer) may be in the range of 1 to 5:100.

When the weight ratio of the alkali metal to the copolymer is higher or lower than the above weight ratio of the present application, the adhesion properties of a separator may deteriorate. In particular, the peel adhesion and electrode adhesion of this separator may deteriorate.

The adhesion of the separator containing the alkali metal may be determined by forces, such as cohesion and repulsion between elements.

In the copolymer of the present application, shifts in the relative balance of cohesion, adhesion, and repulsion between elements may occur depending on the content of the alkali metal, resulting in changes in adhesion to an inorganic

substance or electrode adhesion.

The use of the alkali metal in the preparation of a binder copolymer may enhance the overall adhesion by the combination of adhesion and cohesion due to an increase in cohesion between elements, but the addition thereof in excessive amounts may rather lead to deterioration in the overall adhesion with a decrease in cohesion.

In the meantime, enhancement in the adhesion to the inorganic substance means an increase in adhesion between the inorganic substance and a substrate, which may, in turn, mean that an increase in the amount of the inorganic substance can enhance the heat-resistant properties of a separator.

The electrode adhesion of a separator may reduce possible defect rates occurring when loading electrodes during battery assembly while minimizing the formation of dead spaces and enhancing the ionic conductivity in an electrolyte solution.

In addition, a single coating of a binder layer on an inorganic coating layer may maximize electrode adhesion, which may ultimately minimize battery defect rates and further enhance battery performance.

In one embodiment, the copolymer may include a monomer repeating unit represented by Formula 1 below.

[Formula 1]

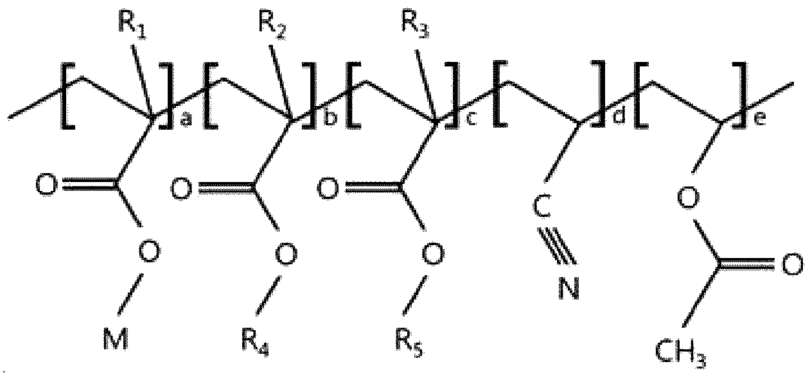

In Formula 1,

$R_1$ to $R_3$ are each independently hydrogen, a straight-chain or branched-chain hydrocarbon having 1 to 4 carbon atoms, or a combination thereof, $R_4$ is a straight-chain or branched-chain hydrocarbon having 1 to 20 carbon atoms, $R_5$ is a straight-chain or branched-chain hydrocarbon including cyclopentyl, cyclohexyl, cyclooctyl, tetrahydrofuran, furan, dioxane, or a combination thereof, M is hydrogen, an alkali metal, or a combination thereof, and $a + b + c + d + e = 1$.

In Formula 1, a, b, c, d, and e correspond to the weight fractions of the respective monomer units, and the sum of the weight fractions of the respective monomer units is 1.

In one embodiment, $R_1$ to $R_3$ in Formula 1 may each independently include one or more selected from the group consisting of hydrogen, methyl, and ethyl.

In addition, $R_4$ in Formula 1 may include one or more selected from the group consisting of methyl, ethyl, n-propyl, isopropyl, n-butyl, tert-butyl, n-pentyl, n-hexyl, n-heptyl, n-octyl, 2-ethyl hexyl, n-nonyl, n-decyl, n-undecyl, lauryl, n-dodecyl, n-tridecyl, n-tetradecyl, n-pentadecyl, cetyl, n-hexadecyl, n-heptadecyl, stearyl, n-octadecyl, n-nonadecyl, n-icosyl, n-henicosyl, n-docosyl, isopentyl, isoheptyl, isooctyl, isononyl, isodecyl, isoundecyl, isododecyl, isotridecyl, isotetradecyl, isopentadecyl, isocetyl, isohexadecyl, isoheptadecyl, isostearyl, isooctadecyl, isononadecyl, isoicosyl, isohenicosyl, and isodocosyl.

In the meantime, enhancement in the adhesion to the inorganic substance means an increase in adhesion between the inorganic substance and a substrate, which may, in turn, mean that an increase in the amount of the inorganic substance can enhance the heat-resistant properties of a separator.

The electrode adhesion of a separator may reduce possible defect rates occurring when loading electrodes during battery assembly while minimizing the formation of dead spaces and enhancing the ionic conductivity in an electrolyte solution.

In addition, a single coating of a binder layer on an inorganic coating layer may maximize electrode adhesion, which may ultimately minimize battery defect rates and further enhance battery performance.

In one example, the copolymer may be a random or block copolymer depending on a synthesis process.

In one example, the copolymer may have a number average molecular weight in the range of 10,000 to 1,000,000.

When the number average molecular weight of the copolymer is smaller than 10,000, the fluidity of the copolymer may be increased, leading to deterioration in the dispersibility and deterioration in the heat-resistant properties of a

separator. When the number average molecular weight of the copolymer exceeds 1,000,000, the viscosity may be excessively high for use, and the pores of a separator may be blocked, leading to deterioration in air permeability and resistance.

A slurry composition, according to another aspect of the present application, may include the copolymer and inorganic particles.

As the inorganic particles, any insulator particles may be used without limitation. Preferably, the inorganic particles are high dielectric constant insulator particles.

Specific examples of the inorganic particles may include $Al_2O_3$, AlOOH, $SiO_2$, $TiO_2$, $ZrO_2$, ZnO, NiO, CaO, $SnO_2$, $Y_2O_3$, MgO, $BaTiO_3$, $CaTiO_3$, $SrTiO_3$, SiC, $Li_3PO_4$, Pb(Zr,Ti)$O_3$(PZT), (Pb,La)(Zr,Ti)$O_3$(PLZT), and a mixture thereof.

The inorganic particles are not particularly limited in size but may, for example, have a median particle diameter in the range of 0.01 μm to 30 μm, which is more preferably in the range of 0.1 μm to 10 μm. When the median particle diameter of the inorganic particles is smaller than the above preferable range, the dispersibility may be reduced. When the median particle diameter exceeds the above preferable range, the thickness of a coating layer may be increased after coating, leading to deterioration in mechanical properties.

In addition, the inorganic particles are not particularly limited in form but may, for example, have a spherical, platy, elliptical, or irregular form.

A separator, according to a further aspect of the present application, may include the slurry composition.

The separator may be prepared by coating at least one side of a porous substrate film with the above-described slurry composition or by forming the slurry composition into a film form and laminating such a formed film to the porous substrate film.

In the meantime, the separator may be used as a separator for a secondary battery and, for example, may be used as a separator for a lithium secondary battery.

One example of preparing the separator may include: Step (a) of preparing a polymer solution by dissolving or dispersing the copolymer in a solvent; Step (b) of adding the inorganic particles to the polymer solution obtained in Step a), followed by mixing; and Step (c) of coating one or more regions selected from the group consisting of the surface of a polyolefin-based separator substrate and some pores of the substrate with the resulting mixture obtained in Step b), followed by drying.

First, 1) the polymer solution having a form in which the copolymer is dissolved or dispersed in an appropriate solvent is produced and prepared.

As the solvent, those having a solubility index similar to that of the copolymer, used as a binder, and having a low boiling point are preferably used. This is to facilitate uniform mixing and the removal of the solvent later. Non-limiting examples of the solvents usable may include acetone, tetrahydrofuran, methylene chloride, chloroform, dimethylformamide, N-methyl-2-pyrrolidone (NMP), cyclohexane, water, or a mixture thereof. More preferably, the solvent is used in a water-dispersed state.

2) The inorganic particles are added to the prepared polymer solution and dispersed to prepare the mixture of the inorganic particles and the polymer.

Preferably, a process of dispersing the polymer solution and the inorganic particles is performed, in which case, the dispersion time may be appropriately in the range of 1 to 50 hours. Typical methods may be used as the dispersion method, and a ball milling method is particularly preferable.

The mixture composed of the inorganic particles and the polymer is not particularly limited in composition. However, depending on the composition of the mixture, the thickness, pore size, and porosity of the finally prepared organic/inorganic composite porous separator of the present disclosure may be controlled.

In other words, the higher the ratio (ratio = I/P) of the inorganic particles (I) with respect to the polymer (P), the higher the porosity of the separator, which results in an increase in the thickness of the separator at the same solid content (total weight of the inorganic particles and the polymer). In addition, pores are more likely to be formed between the inorganic particles, so the pore size becomes larger. In this case, the larger the size (particle diameter) of the inorganic particles, the greater the interstitial distance between the inorganic particles, thus increasing the pore size.

3) The upper portion of the prepared polyolefin-based separator substrate is coated with the prepared mixture of the inorganic particles and the polymer, followed by drying, so that the separator of the present disclosure can be obtained.

In this case, as a method of coating the upper portion of the polyolefin-based separator substrate with the mixture of the inorganic particles and the polymer, typical coating methods known in the art may be used. For example, various methods, such as dip coating, die coating, roll coating, comma coating, or combinations thereof, may be used. In addition, when coating the upper portion of the polyolefin-based separator substrate with the mixture of the inorganic particles and the polymer, the coating may be performed on both sides of the separator substrate or may be selectively performed on only one side.

When using the separator in a secondary battery, lithium ions may be transferred not only via the separator substrate but also via a porous active layer. In addition, in the case where an external impact causes internal short circuits, the aforementioned safety enhancement effect can be exhibited.

In addition, the secondary battery may include a positive electrode, a negative electrode, the separator interposed between the positive and negative electrodes, and an electrolyte solution.

The secondary battery may be manufactured by typical methods known in the art. As one example thereof, the secondary battery is manufactured by interposing the separator between the electrodes to obtain an assembly and then injecting the electrolyte solution into the assembly.

The electrodes to be used in conjunction with the separator are not particularly limited. However, typical positive electrode active materials usable in positive electrodes of secondary batteries may be used as a positive electrode active material, and non-limiting examples thereof may include lithium intercalation materials, such as lithium manganese oxide (lithiated magnesium oxide), lithium cobalt oxide (lithiated cobalt oxide), lithium nickel oxide (lithiated nickel oxide), or a composite oxide formed by combinations thereof. In addition, typical negative electrode active materials usable in negative electrodes of existing electrochemical devices may be used as a negative electrode active material, and non-limiting examples thereof may include lithium metal or lithium alloys and lithium intercalation material, such as carbon, petroleum coke, activated carbon, graphite, or other carbon-based materials. Both the electrodes are configured in such forms that both the aforementioned positive and negative electrode active materials are bound to a positive electrode current collector, that is, a foil made of aluminum, nickel, or a combination thereof, and a negative electrode current collector, that is, a foil made of copper, gold, nickel, copper alloys, or a combination thereof, respectively.

The electrolyte solution preferably has a form in which a salt having a structure such as A+B-, where A+ includes an alkali metal cation such as Li+, Na+, K+, or an ion composed of combinations thereof, and B- includes an anion such as $PF_6$-, $BF_4$-, Cl-, Br-, I-, $ClO_4$-, $AsF_6$-, $CH_3CO_2$-, $CF_3SO_3$-, $N(CF_3SO_2)_2$-, $C(CF_2SO_2)_3$-, or an ion composed of combinations thereof, is dissolved and dissociated in an organic solvent composed of propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, NMP, ethyl methyl carbonate (EMC), gamma-butyrolactone (GBL), or a mixture thereof.

In addition to a typical winding process, a process in which the separator and the electrodes are stacked and folded is usable as a process of applying the separator to the battery.

## Mode for Invention

Hereinafter, the present application will be described in more detail using the following examples. However, the present application is not limited thereto.

[Preparation Example 1] Preparation of copolymer

Into a four-necked flask reactor, 200 parts by weight of distilled water, 5 parts by weight of acrylonitrile (AN), 10 parts by weight of butyl acrylate (BA), and 0.1 to 3 parts by weight of an emulsifier with respect to a cyclic monomer mixture the content of which was controlled were introduced, stirred, and heated to a temperature to 70°C with nitrogen gas purging.

To the reactor prepared at a temperature of 70°C, a mixture of 0.1 parts by weight of ammonium persulfate, serving as a thermally degradable radical initiator, and 50 parts by weight of distilled water was added in a dropwise manner for 1 hour while adding a monomer mixture of 15 parts by weight of AN, 65 parts by weight of BA, 5 parts by weight of acrylic acid (AA), and 10 parts by weight of vinyl acetate (VAc) in a dropwise manner for 3 hours to prepare a copolymer through an emulsion polymerization reaction.

A metal hydroxide (NaOH, LiOH, and KOH) aqueous solution was added to the prepared copolymer to perform a neutralization reaction, thereby finally preparing a binder copolymer for a secondary battery separator.

[Preparation Example 2] Preparation of Porous Film-Coating Slurry

Inorganic particles (boehmite (median particle diameter: 0.5 μm)) and the binder copolymer for a separator, prepared according to Preparation Example 1, were mixed to achieve a solid content weight ratio of 80:20, followed by further adding and mixing distilled water to adjust the solid content concentration to 35 wt%. The resulting mixture was sufficiently dispersed using a ball milling method or a mechanical stirrer to prepare a slurry.

[Preparation Example 3] Preparation of separator

The porous film-coating slurry, prepared according to Preparation Example 2, was applied on a polyolefin porous substrate (polyethylene (PE), polypropylene (PP), and the like), thereby forming an inorganic coating layer. As for the coating method, various methods, such as bar coating, dip coating, slot die coating, gravure coating, comma coating, and the like, are applicable.

In addition, after coating, the resulting coating layer was dried by methods involving warm air, hot air, vacuum drying, infrared drying, and the like, in which case, the drying was performed at a temperature range of 50°C to 80°C.

The inorganic coating layer had a thickness in the range of 1 to 6 μm on one or both sides. When the thickness was smaller than 1 μm, there was a problem in that the heat resistance of the separator significantly decreased. When the thickness exceeded 6 μm, the separator had an excessively large thickness, so the energy density of a battery could decrease while the resistance increased.

Example 1

A binder copolymer for a separator was prepared according to Preparation Example 1 using 10 parts by weight of cyclohexyl methacrylate (CHMA) as a cyclic monomer. Using this binder copolymer, a porous film-coating slurry and a separator were prepared according to Preparation Examples 2 and 3, respectively.

Example 2

A binder copolymer for a separator, a porous film-coating slurry, and a separator were prepared in the same manner as in Example 1, except for using 10 parts by weight of tetrahydrofurfuryl acrylate (THFA) as the cyclic monomer.

Example 3

A binder copolymer for a separator, a porous film-coating slurry, and a separator were prepared in the same manner as in Example 1, except for using 10 parts by weight of (5-ethyl-1,3-dioxan-5-yl)methyl acrylate (EDMA) as the cyclic monomer.

Comparative Example 1

A binder copolymer for a separator, a porous film-coating slurry, and a separator were prepared in the same manner as in Example 1, except for further introducing 5 parts by weight of BA for use instead of the cyclic monomer.

Comparative Example 2

A binder copolymer for a separator, a porous film-coating slurry, and a separator were prepared in the same manner as in Example 1, except for further introducing 10 parts by weight of BA for use instead of the cyclic monomer.

Comparative Example 3

A binder copolymer for a separator, a porous film-coating slurry, and a separator were prepared in the same manner as in Example 1, except for further introducing 10 parts by weight of BA in a dropwise manner instead of the cyclic monomer while changing the introduced AN content to 5 parts by weight.

The parts by weight of each monomer constituting the copolymers of Examples 1 to 3 and Comparative Examples 1 to 3 are shown in Table 1 below.

[Table 1]

| | Monomer content (parts by weight) | | | | |
|---|---|---|---|---|---|
| | Cyclic monomer | AN | BA | AA | VAc |
| Example 1 | 10 (CHMA) | 20 | 75 | 5 | 10 |
| Example 2 | 10 (THFA) | 20 | 75 | 5 | 10 |
| Example 3 | 10 (EDMA) | 20 | 75 | 5 | 10 |
| Comparative Example 1 | - | 20 | 80 | 5 | 10 |
| Comparative Example 2 | - | 20 | 85 | 5 | 10 |
| Comparative Example 3 | - | 10 | 85 | 5 | 10 |

In Table 1, AN, BA, AA, and Vac stand for acrylonitrile, butyl acrylate, acrylic acid, and vinyl acetate, respectively.

[Evaluation Example 1] Dry electrode adhesion of separator

Each of the separators, prepared according to Examples 1 to 3 and Comparative Examples 1 to 3, was cut to dimensions of 25 mm in width and 75 mm in length for preparation.
A negative electrode was cut to dimensions of 25 mm in width and 40 mm in length on the prepared separator, positioned so that the coating surface of the negative electrode made contact with the coating surface of the separator, and compressed using a hot press at a temperature of 65°C and a pressure of 500 kg for 10 seconds.
The prepared specimen was mounted on a universal testing machine (UTM) (1 kgf load cell) to fix the negative electrode at the top and fix the separator at the bottom, followed by measuring the 180° peel strength at a speed of 100 mm/min. The average value thereof was calculated through measurement performed on five or more specimens constructed per sample.

[Evaluation Example 2] Air permeability of separator (Gurley test)

Each separator of Examples 1 to 3 and Comparative Examples 1 to 3 was cut to a circular form with a diameter of 30 mm and prepared. The prepared separator was left unattended for 24 hours in a dry room under the following conditions: a temperature of 20°C and a humidity in the range of 0% to 5%. Then, the separator was positioned in the measuring section of an air permeability measuring device (Ilshin Autoclave Co., Ltd).
Next, 100 ml of air per second was sprayed onto the separator to measure the amount of gas that had passed through for 5 seconds.

[Evaluation Example 3] Electrical resistance of separator

Each separator of Examples 1 to 3 and Comparative Examples 1 to 3 was cut to a circular form with a diameter of 18 mm and prepared.
The prepared separator was dried once again in a vacuum oven at a temperature of 60°C for 12 hours, followed by constructing a coil cell based on a negative electrode containing graphite-silicon oxide and a positive electrode containing nickel-cobalt-manganese in a dry room under the following conditions: a temperature of 20°C and a humidity in the range of 0% to 5%.
The battery resistance value of the coin cell constructed was measured using an impedance instrument manufactured by BioLogics.
The increased resistance value (Ω) was calculated as a percentage through comparison with a separator not coated with the porous film-coating slurry.
The dry electrode adhesion, air permeability, and battery resistance of the separators of Examples 1 to 3 and Comparative Examples 1 to 3, measured according to Evaluation Examples 1 to 3, are shown in Table 2 below.

[Table 2]

| | Dry electrode adhesion (gf/20 mm) | Air permeability (sec/100 ml) | Battery resistance (%) |
|---|---|---|---|
| Example 1 | 2.15 | 233 | 2.533 |
| Example 2 | 3.36 | 208 | 2.326 |
| Example 3 | 2.66 | 221 | 2.452 |
| Comparative Example 1 | 2.08 | 647 | 4.293 |
| Comparative Example 2 | 1.86 | 788 | 5.121 |
| Comparative Example 3 | 1.42 | 922 | 9.337 |

As shown in Table 2, the dry electrode adhesion of each separator of Examples 1 to 3, using the copolymer binder including the cyclic monomer, was superior to that of each separator of Comparative Examples 1 to 3, using the cyclic monomer-free copolymer.
In other words, the dry electrode adhesion of each separator of Examples 1 to 3 was measured to fall within a range of 2.1 gf/20 mm or more and 4 gf/20 mm or less.
In particular, it was confirmed that the electrode adhesion was higher when using THFA or EDMA, oxygen atom-containing heterocyclic monomers, than when using
CHMA, an aliphatic hydrocarbon cyclic monomer.

In addition, the air permeability of each separator of Examples 1 to 3, using the copolymer binder including the cyclic monomer, was lower than that of each separator of Comparative Examples 1 to 3, using the cyclic monomer-free copolymer.

In other words, the air permeability of each separator of Examples 1 to 3 was measured to fall within a range of 200 sec/100 ml or more and 500 sec/100 ml or less.

In addition, the battery resistance of the cell to which each separator of Examples 1 to 3, using the copolymer binder including the cyclic monomer, was applied was lower than that of the cell to which each separator of Comparative Examples 1 to 3, using the cyclic monomer-free copolymer, was applied.

In other words, the battery resistance of the cell to which each separator of Examples 1 to 3, using the copolymer binder including the cyclic monomer, was applied was measured to fall within a range of 2% or more and 4% or less.

Therefore, each of the separators of Examples 1 to 3, to which the copolymer including the cyclic monomer was applied, could have enhanced electrode adhesion and reduced air permeability compared to each of the separators of Comparative Examples 1 to 3, to which the cyclic monomer-free copolymer was applied, thereby reducing the battery resistance of a secondary battery.

It was seen that the separator using the binder copolymer, including the cyclic monomer the content of which fell within the range of the present application, had excellent adhesion and air permeability and thus could improve the battery resistance performance of a secondary battery.

In addition, the binder copolymer, including the cyclic monomer the content of which fell within the range of the present application, can enhance the adhesion, thereby enhancing the stability of a battery during transport and operation, reducing defect rates during process application, and improving productivity.

In the meantime, the binder copolymer, including the cyclic monomer the content of which fell within the range of the present application, can also be applied to secondary batteries requiring high voltage and high current characteristics through reduced battery resistance.

The scope of the present disclosure is defined by the appended claims rather than the detailed description presented above. All changes or modifications derived from the meaning and scope of the claims and the concept of equivalents should be construed to fall within the scope of the present disclosure.

## Industrial Applicability

A copolymer of the present disclosure can increase electrode adhesion to a separator substrate and improve the heat resistance and air permeability of a separator.

In addition, the copolymer of the present disclosure can reduce possible defect rates occurring in the lamination process during battery assembly, minimize the formation of dead spaces, and enhance ion conductivity and air permeability within an electrolyte solution.

In the meantime, using the copolymer of the present disclosure, the adhesion of the separator can be maximized, and ultimately, the electrical resistance characteristics and stability of a battery can be enhanced while minimizing battery defects.

## Claims

**1.** A copolymer comprising:

an acrylonitrile-based monomer unit;
an acrylate-based monomer unit;
an acrylic acid-based monomer unit;
a vinyl acetate-based monomer unit; and
a cyclic monomer unit comprising cyclopentyl, cyclohexyl, cyclooctyl, tetrahydrofuran, furan, dioxane, or a combination thereof.

**2.** The copolymer of claim 1, wherein the copolymer, based on 100 wt% of the total weight thereof, comprises 10 wt% or more and 20 wt% or less of the acrylonitrile-based monomer, 35 wt% or more and 70 wt% or less of the acrylate-based monomer unit, 1 wt% or more and 10 wt% or less of the acrylic acid-based monomer unit, 5 wt% or more and 15 wt% or less of the vinyl acetate-based monomer unit, and 10 wt% or more and 20 wt% or less of the cyclic monomer unit.

**3.** The copolymer of claim 1, wherein the acrylate-based monomer unit is formed by polymerization of one or more selected from the group consisting of methyl acrylate, methyl methacrylate, ethyl acrylate, ethyl methacrylate, propyl acrylate, propyl methacrylate, isopropyl acrylate, isopropyl methacrylate, butyl acrylate, butyl methacrylate, sec-butyl

acrylate, sec-butyl methacrylate, tert-butyl acrylate, tert-butyl methacrylate, ethyl hexyl acrylate, ethyl hexyl methacrylate, lauryl acrylate, lauryl methacrylate, stearyl acrylate, and stearyl methacrylate,

the acrylic acid-based monomer unit is formed by polymerization of one or more selected from the group consisting of acrylic acid and methacrylic acid, and
the acrylonitrile-based monomer unit is formed by polymerization of one or more selected from the group consisting of acrylonitrile and methacrylonitrile.

**4.** The copolymer of claim 1, wherein the cyclic monomer unit is formed by polymerization of cyclopentyl acrylate, cyclopentyl methacrylate, cyclohexyl acrylate, cyclohexyl methacrylate, cyclooctyl acrylate, cyclooctyl methacrylate, furfuryl acrylate, furfuryl methacrylate, furan methacrylate, tetrahydrofurfuryl acrylate, tetrahydrofurfuryl methacrylate, and (5-ethyl-1,3-dioxan-5-yl)methyl acrylate, or a combination thereof.

**5.** The copolymer of claim 1, wherein the acrylic acid-based monomer unit is bonded to an alkali metal.

**6.** The copolymer of claim 1, wherein the copolymer comprises a monomer repeating unit represented by Formula 1 below,

[Formula 1]

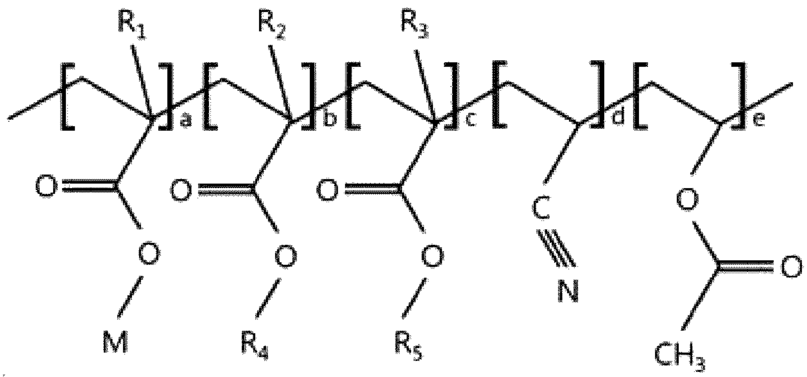

where in Formula 1,

$R_1$ to $R_3$ are each independently hydrogen, a straight-chain or branched-chain hydrocarbon having 1 to 4 carbon atoms, or a combination thereof,
$R_4$ is a straight-chain or branched-chain hydrocarbon having 1 to 20 carbon atoms,
$R_5$ is a straight-chain or branched-chain hydrocarbon comprising cyclopentyl, cyclohexyl, cyclooctyl, tetrahydrofuran, furan, dioxane, or a combination thereof,
M is hydrogen, an alkali metal, or a combination thereof, and

$$a + b + c + d + e = 1.$$

**7.** The copolymer of claim 1, wherein the copolymer is a random or block copolymer.

**8.** A slurry composition comprising:

the copolymer of any one of claims 1 to 7; and
inorganic particles.

**9.** A separator comprising:
the slurry composition of claim 8.

**10.** A secondary battery comprising:
the separator of claim 9.

## INTERNATIONAL SEARCH REPORT

International application No.
**PCT/KR2023/017214**

**A. CLASSIFICATION OF SUBJECT MATTER**

**C08F 220/44**(2006.01)i; **C08F 220/06**(2006.01)i; **C08F 220/14**(2006.01)i; **C08F 220/18**(2006.01)i; **C08F 218/08**(2006.01)i; **C08L 33/20**(2006.01)i; **C08L 53/00**(2006.01)i; **H01M 50/414**(2021.01)i; **H01M 10/052**(2010.01)i

According to International Patent Classification (IPC) or to both national classification and IPC

**B. FIELDS SEARCHED**

Minimum documentation searched (classification system followed by classification symbols)

C08F 220/44(2006.01); C09J 133/08(2006.01); C09J 133/10(2006.01); H01M 2/16(2006.01); H01M 50/403(2021.01); H01M 50/409(2021.01); H01M 50/414(2021.01); H01M 50/449(2021.01); H01M 50/451(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 분리막(separator), 공중합체(copolymer), 아크릴로나이트릴(acrylonitrile), 아크릴레이트(acrylate), 아크릴산(acrylic acid), 비닐아세테이트(vinyl acetate), 고리형 단량체(cyclic monomer), 이차전지(secondary battery)

**C. DOCUMENTS CONSIDERED TO BE RELEVANT**

| Category* | Citation of document, with indication, where appropriate, of the relevant passages | Relevant to claim No. |
|---|---|---|
| X | CN 112920747 A (SHENZHEN HAODIAN TECHNOLOGY CO., LTD.) 08 June 2021 (2021-06-08)<br>See claims 1 and 10; and paragraphs [0001], [0007]-[0009], [0044], [0052] and [0076]. | 1-10 |
| A | KR 10-2022-0138714 A (SAMSUNG SDI CO., LTD.) 13 October 2022 (2022-10-13)<br>See entire document. | 1-10 |
| A | KR 10-2022-0141068 A (HANSOL CHEMICAL CO., LTD.) 19 October 2022 (2022-10-19)<br>See entire document. | 1-10 |
| A | KR 10-2232529 B1 (SAMSUNG SDI CO., LTD. et al.) 26 March 2021 (2021-03-26)<br>See entire document. | 1-10 |
| A | JP 2016-213019 A (ASAHI KASEI CORP.) 15 December 2016 (2016-12-15)<br>See entire document. | 1-10 |

☐ Further documents are listed in the continuation of Box C.
☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **02 February 2024** | **05 February 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.
**PCT/KR2023/017214**

| Patent document cited in search report | Publication date (day/month/year) | Patent family member(s) | Publication date (day/month/year) |
|---|---|---|---|
| CN 112920747 A | 08 June 2021 | None | |
| KR 10-2022-0138714 A | 13 October 2022 | None | |
| KR 10-2022-0141068 A | 19 October 2022 | EP 4131624 A1 | 08 February 2023 |
| | | JP 2023-525230 A | 15 June 2023 |
| | | KR 10-2630039 B1 | 29 January 2024 |
| | | US 2023-0268616 A1 | 24 August 2023 |
| | | WO 2022-220336 A1 | 20 October 2022 |
| KR 10-2232529 B1 | 26 March 2021 | KR 10-2019-0132025 A | 27 November 2019 |
| | | US 2021-0226298 A1 | 22 July 2021 |
| | | WO 2019-221381 A1 | 21 November 2019 |
| JP 2016-213019 A | 15 December 2016 | JP 6574602 B2 | 11 September 2019 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 101430975
- KR 1020060072065